Europäisches Patentamt

European Patent Office

Office européen des brevets

(11) Publication number: **0 511 840 B1**

# EUROPEAN PATENT SPECIFICATION

(45) Date of publication of patent specification: **25.10.95**

(51) Int. Cl.⁶: **C04B 35/58**, B22D 11/04, C04B 35/18

(21) Application number: **92303848.3**

(22) Date of filing: **29.04.92**

(54) **Mullite/boron nitride composite break ring.**

(30) Priority: **30.04.91 US 693545**

(43) Date of publication of application:
**04.11.92 Bulletin 92/45**

(45) Publication of the grant of the patent:
**25.10.95 Bulletin 95/43**

(84) Designated Contracting States:
**DE GB**

(56) References cited:
**GB-A- 784 704**
**US-A- 4 539 300**

(73) Proprietor: **ADVANCED CERAMICS CORPORA-TION**
**11709 Madison Avenue**
**Lakewood,**
**Ohio 44107 (US)**

(72) Inventor: **Shaffer, Gregory Wayne**
**289, Brad Drive**
**Brunswick,**
**Ohio 44212 (US)**

(74) Representative: **W.P. Thompson & Co.**
**Coopers Building,**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to ceramic composite break rings and a method of making ceramic composites.

More particularly the present invention relates to ceramic composite break rings and a method of making ceramic composites having good errosion and corrosion resistance to molten metals and alloys, and good resistance to thermal shock which comprises the blending of mullite with boron nitride and then hot pressing the blend.

Ceramic materials are currently being used successfully in a variety of applications, such as for break rings in horizontal continuous casting processes. The horizontal continuous casting process involves extreme environmental conditions such as rapid rises in temperature, and severe temperature gradients. Generally, break rings for use in this type of application would be subjected to extremely fast temperature rises, and high temperature gradients often in excess of $1000°C/cm$. These conditions require a material that has good thermal shock resistance to prevent breaking. Additionally, in this type of application, the material should preferably have a high abrasive resistance and corrosion resistance with respect to molten metals, be machinable, and be economical to manufacture.

Boron nitride (BN) is presently being successfully used as a material for break rings due to its good thermal shock resistance, corrosion resistance, stability at high temperature, and machinability. However, it licks good abrasion resistance, which renders it subject to high wear rates when exposed to flowing metal. Additionally, boron nitride ceramics typically contain a $B_2O_3$ binder phase that can react chemically with molten metals, which further degrades the integrity of the boron nitride ceramic. The degradation of the boron nitride can also cause problems with the metal being cast. Boron nitride particles, as well as bubbles which form from gaseous $B_2O_3$ or $CO_2$ from the reaction of $B_2O_3$ with carbon, can be trapped in the metal as it solidifies.

Alumina ($Al_2O_3$) is also used in molten metal applications due to its hardness, abrasion resistance, and chemical stability. Although satisfactory, alumina ceramics often have poor thermal shock properties, and are difficult to machine because of their hardness. Thus ceramic components have been made with boron nitride and alumina in which the material has the abrasion resistance and chemical stability of the alumina and has the thermal shock resistance and good machinability of the boron nitride.

US-A- 4 007 049 discloses a thermal shock resistant material that has a high degree of resistance to failure by thermal fracture and which comprises a composite of a refractory oxide and flaked boron nitride. The boron nitride flakes are incorporated into a refractory oxide matrix as an inert, nonreactive, uniform dispersed phase in proportions sufficient to provide the oxide composite with an increased resistance to thermal shock.

GB-A- 784 704 discloses articles comprising boron nitride and refractory oxide, such as mullite in which the preferred compositions contain only up to 30 percent by weight boron nitride.

S.G. Tresvyatskii et al in "Effect of Boron Nitride Addition on Some Properties of Aluminosilicate Refractories", Institute for Materials Science Research, Academy of Sciences of the Ukrainian SSR, No. 4, pp. 36-39, April, 1968 discloses that the thermal shock resistance of aluminosilicate refractories can be increased with an addition of boron nitride.

Lewis et al in "Microstructure and Thermomechanical Properties in Alumina- and Mullite-Boron-Nitride Particulate Ceramic-Ceramic Composites", Ceram. Eng. Sci. Proc., 2:719-727 (Nos. 7-8, 1981) discloses the preparation of $Al_2O_3$-BN and mullite-BN composites and provides data on the thermal shock resistance of such composites.

US-A- 4 904 626 discloses a ceramic composite composed of a fused zirconia mullite with boron nitride that is recited as having good erosion and corrosion resistance to molten metals and good resistance to thermal shock. However, these composites have been found to expand up to $1100°C$ and then go through a shrinkage phase transformation of the zirconia mullite. In some applications, this phenomenon would lead to cracking due to the stress imparted to the composite during heating.

It has now been found possible to effectively correct for shrinkage at high temperatures by providing a ceramic material that has good erosion/corrosion resistance in high temperature environments. It has also been found possible to provide a ceramic composite that is suitable for use as a break ring in a horizontal continuous casting process.

An aim of the present invention is to provide a hot-pressed ceramic composite having good erosion/corrosion resistance in high temperature environments, good resistance to thermal shock, and a substantially linear coefficient of thermal expansion.

According to the present invention there is provided a break ring of ceramic composite for use in horizontal continuous casting processes which consists of a mixture of from 40 to less than 70 weight percent mullite and from more than 30 to 60 weight percent boron nitride, based on the weight of the break ring.

Mullite ($3Al_2O_3 \cdot 2SiO_2$) is an orthorhombic homogeneous solid solution of alumina in sillimanite and can be made by heating andalusite, sillimanite or kyanite. The solidified mass can be crushed to produce a particulate form of the mullite.

In accordance with this invention, the amount of mullite and boron nitride in the ceramic composite can be from 40 to less than 70 weight percent mullite and from more than 30 to 60 weight percent boron nitride, preferably from 50 to 65 weight percent mullite and from 35 to 50 weight percent boron nitride, and more preferably about 50 weight percent mullite and 50 weight percent boron nitride. An amount of mullite of 70 weight percent or more would render the composite too brittle while an amount of mullite below 40 weight percent would not effectively improve the erosion/corrosion characteristics of the composite.

Another aspect of the invention is a method for producing a ceramic composite having good resistance to thermal shock and good erosion/corrosion resistance to molten metals and alloys which comprises:

a) blending a mixture consisting of from 40 to less than 70 weight percent particulate mullite and from more than 30 to 60 weight percent particulate boron nitride;

b) heating and compressing the blended mixture in a mold under an inert atmosphere at a temperature between about 1675°C and about 1770°C at a pressure between about 126.6 and 189.87 Kg/cm$^2$ (1800 and 2700 pounds per scare inch) until the composite substantially stops shrinking; and

c) cooling the composite.

As used herein an inert atmosphere is a vacuum or an atmosphere composed of an inert gas such as, for example, argon, nitrogen or the like.

In some applications it may be preferable to have the purity of the boron nitride not less than 99 weight percent, and more preferably not less than 99.5 weight percent boron nitride. The purity refers mainly to the absence of impurities which form liquids or react to form liquids at the processing temperature. For example, the impurity of boron oxide in boron nitride after hot pressing can form a glassy grain boundary phase during processing which could result in the ceramic composite being severely eroded/corroded in molten alloys. Non-liquid forming impurities may be present in larger amounts without effecting the overall characteristics of the ceramic composite.

In other applications 97 weight percent boron nitride material could be used to produce good ceramic composites of this invention. Thus the oxygen content of boron nitride in the starting material could be up to 3 percent by weight or more. The temperature of the process depends on the oxygen content in the boron nitride so that a higher temperature of about 1730°C ± 40°C, preferably about 1740°C, would be used for boron nitride containing oxygen equal to or in excess of 2% by weight while a temperature of 1675°C to 1730°C, preferably about 1725°C, could be used for boron nitride containing less than 2% by weight oxygen.

Preferably the particulate mullite should be sized between about 0.1 and 75 microns and preferably between about 2 and about 45 microns. The particulate boron nitride should be sized between about 0.1 and 45 microns and preferably between about 1 and about 25 microns. The particulate components should be blended to form a substantially homogeneous mixture in a conventional type blender or mixer such as, for example, double cone blenders, twin shell or V-blenders, drum blenders, and the like.

The blended mixture is then heated at a temperature between about 1675°C and 1730°C, preferably between about 1710°C and 1725° at a pressure between about 126.6 and 189.87 kg/cm$^2$ (1800 and 2700 psi), preferably between about 147.7 and 161.7 Kg/cm$^2$ (2100 and 2300 psi). Preferably the heating step should be at a rate of 200°C to 400°C per hour, more preferably 300°C to 350°C per hour and the pressure at a rate of 21.1 to 42.2 Kg/cm$^2$ (300 psi to 600 psi) per hour and most preferably 28.13 to 35.16 Kg/cm$^2$ (400 psi to 500 psi) per hour.

The temperature and pressure selected should be sufficient to form the ceramic composite but below the temperature that the mixture would melt or react with the mold material, such as, for example, a graphite mold. The time period for the hot pressing step should be continued until the ceramic composites effectively or substantially stops shrinking.

Hot isostatic compression could be used in which there is no one direction of compression, and the composite produced will be isotropic. The compression and heating step should be performed in a non-oxidizing atmosphere with respect to the blended mixture. A suitable non-oxidizing atmosphere may be provided by a vacuum, or an atmosphere of a non-oxidizing gas such as for example, an inert gas particularly argon, nitrogen, or the like. In an oxidizing atmosphere, such as for example, air, the boron nitride could oxidize to form a $B_2O_3$ phase, which is in a liquid phase during heating. This impurity could result in an inferior composite with respect to erosion/corrosion in molten alloys.

After the ceramic composite has effectively stopped shrinking, the composite is cooled and machined to appropriate sizes and shapes for its particular application.

Whether conventional hot-uniaxial pressing techniques or isotatic hot-pressing techniques are employed, the composite produced can be machined in any direction. Preferably, for break ring applications, the break ring should be machined so that the thickness or width of the break ring is parallel to the direction of the applied pressure during the hot-pressing step. Thus the direction of the applied pressure should be parallel to a plane perpendicular to the longitudinal axis of the ring.

The ceramic composite of this invention is ideally suited for use as break rings in horizontal continuous casting processes.

The following examples are intended to illustrate the invention, and are not intended to limit the scope of the present invention in any manner.

The fused zirconia mullite which was used to provide an example of the prior art, was obtained from Keith Refractories of Great Britain, under the trade name K-Ref Fused Zirconia Mullite 36. The fused zirconia mullite had a particle size of 200 Tyler mesh (-75 microns) and was composed of about 62.8 weight percent mullite, about 36.9 weight percent zirconia with a minor amount of $HfO_2$, and remained minor amounts of various oxides and free iron.

The mullite for use in the examples of this invention was obtained from Keith Refractories of Great Britain,under the trade name White Fused Mullite. The mullite had a particle size of 200 Tyler mesh (-75 microns) and was composed of about 76 weight percent $Al_2O_3$ and about 23.6 weight percent $SiO_2$, with a minor amount of $Na_2O/K_2O$,$Fe_2O_3$, CaO, free iron, TiO and MgO.

The boron nitride used in all the examples was obtained from Union Carbide Corporation, a New York Corporation,under the trade name UCC Grade HCP Boron Nitride. This boron nitride was temperature purified to 1900°C to reduce any $B_2O_3$ to less than 0.5 weight percent and with less than 0.5 weight percent lattice oxygen (measured as $O_2$). The boron nitride had a surface area of 10 to 15$m^2$/gm and a particle size in which 94.5% passed through a 325 Tyler mesh (-45 microns). Also Union Carbide Corporation's trade name UCC Grade BN-5 was used in which the $B_2O_3$ was as high as 3 weight percent and with up to 3.0 weight percent lattice oxygen (measured as $O_2$).

Description of the Drawings

Figure 1 is a plot of temperature versus the change in length over the original length of a prior art zirconia mullite/boron nitride sample.

Figure 2 is a plot of temperature versus the change in length over the original length of a mullite/boron nitride sample of this invention.

Example I

Various amounts of boron nitride and fused zirconia mullite were mixed for about two hours in a twin shell V-blender with an intensifier bar. The blended materials were then prepressed into a fine-grain graphite cylindrical mold having a 5.1cm (2 inch) inner diameter, a 9.5cm (3.75 inch) outer diameter and 45.7cm (18 inches) in length. The mold was lined with a layer of Grafoil (Trade Mark of Union Carbide Corporation for flexible graphite) as a precaution to keep the composite from sticking to the mold when processed. In most applications the liner would not be necessary.

Each mold and contents were loaded into a resistance heated tube furnace, and heated for two hours at 1700°C under a pressure of 154.71 Kg/$cm^2$ (2200 psi) provided by a hydraulic ram in a nitrogen atmosphere. The heating and pressurizing rates were 330°C/hr 35.16Kg/$cm^2$/hr (500 psi/hr), respectively. Each mold was allowed to cool and then a 6.4cm (two and a half inch) billet was removed from each mold.

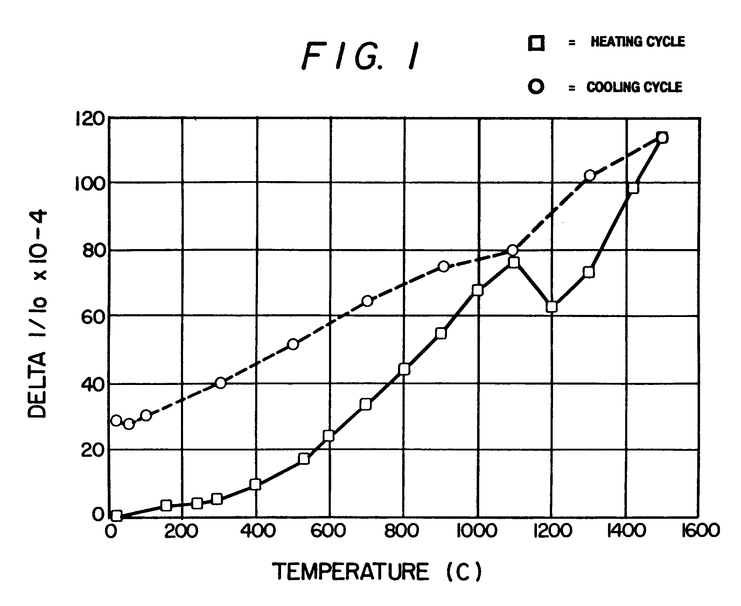

The coefficient of thermal (CTE) expansion for the prior art billet was examined by heating a sample billet at a rate of 400°C per hour up to 1500°C and then cooling the billet down to 20°C. The data obtained is shown in Fig. 1 which is a plot of temperature versus delta L/LO x 10-4 were delta L/LO is the change is length over the original length.

This plot shows that the sample of the billet expands up to 1100°C and then went through a shrinkage step before expanding again. This phenomenon could lead to cracking of an article, such as a break ring, fabricated from this ceramic material since stresses would be imparted to the article during heating to high temperatures. In addition, upon being cooled the length of the sample permanently increased so that the new length had a 0.335 percent permanent expansion.

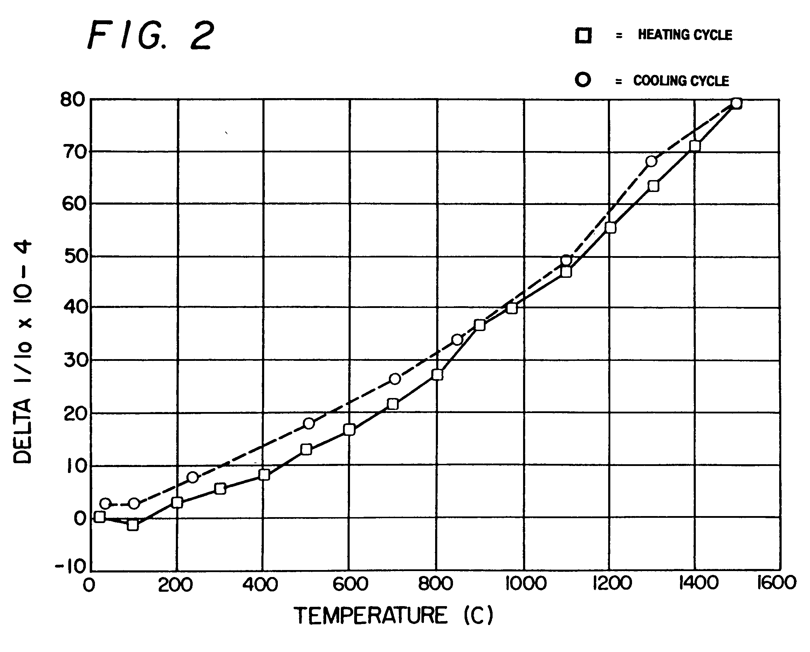

A similar type 6.4cm (two and a half inch) billet was produced except that the starting composition was 200 grams of boron nitride and 200 grams of mullite. The rate of heating procedure was the same up to a

4

temperature of 1725°C under a pressure of 154.71Kg/cm$^2$ (2200 psi). The CTE for a sample of this billet was tested as described above. The data obtained from the heating test is shown in Fig. 2 which is a plot of temperature versus delta L/LO x 10$^{-4}$. This plot shows that the sample of the billet of this invention expanded substantially linearly up to 1500°C and when cooled to 20°C returned to its effective length so that the percent permanent expansion was 0.

The comparison data obtained from this example clearly shows that the composition of this invention can be used in high temperature environments without cracking due to shrinkage or the like.

Example II

Various amounts of boron nitride and mullite were mixed for about two hours in a twin shell V-blender with an intensifier bar. The blended materials were then prepressed into fine-grain graphite molds each having an inside diameter of 2.0 inches (5.1 cm), an outside diameter of 3.75 inches (9.5 cm) and a length of 18 inches (45.7 cm). Each mold was lined with a layer of Grafoil (Trade Mark of Union Carbide Corporation for flexible graphite) to keep the composite from sticking to the mold when processed.

The molds and contents were loaded into a 4 inch (10.2 cm) diameter resistance heated tube furnace, and heated for two hours at various temperatures under a pressure of 154.71 Kg/cm$^2$ (2200 psi) provided by a hydraulic ram in a nitrogen atmosphere. The heating and pressurizing rates were 330°C/hr and 35.16Kg/cm$^2$/hr (500 psi/hr), respectively. The molds were allowed to cool and then a 5.1 cm (two-inch) diameter billet was removed from each mold. The amounts of the blend, proportions of the blend, and temperature of the heating step for each sample billet produced are shown in Table 1.

Sample bars were cut from each billet parallel to the pressing direction and then the percent theoretical density was obtained for each sample. The data obtained arc shown in Table 1. A sample bar from each billet measuring 0.75 inch (1.9 cm) diameter by 3 inches (7.6 cm) long was rotated at 60 revolutions per minute (rpm) in molten 304 stainless steel at a temperature of 1575°C for four hours. The reduction in the diameter of each sample was then measured as a percent reduction per hour and the data obtained are shown in Table 1. The reduction in the diameter of the sample is an indication to the erosion/corrosion resistance characteristics of the sample.

A sample bar from each billet was subject to a thermal shock test which consisted of dunking a room-temperature sample bar measuring 0.75 inch (1.9 cm) diameter by 3 inches (7.6 cm) long into a 1575°C stainless steel melt and then air quenching. The visual results observed are shown in Table 1.

As can be seen in Table 1, a 50/50 weight percent composite of mullite and boron nitride possesses good thermal shock resistance and good erosion/corrosion resistance.

TABLE 1

| Sample No. | Mullite Content (w/o) | BN[1] Content (w/o) | BN[2] Content BN | Hot-Pressing Temperature (°C) | Density (g/cm³) | Percent Theoretical Density | Thermal Shock Test | Compatibility (% Reduction in Diameter per Hour) |
|---|---|---|---|---|---|---|---|---|
| 1*) | 50 | 50 | 0 | 1785 | 2.331 | 90.00 | OK | 4.91 |
| 2*) | 70 | 30 | 0 | 1725 | 2.621 | 95.10 | Cracked | 5.49 |
| 3 | 50 | 50 | 0 | 1725 | 2.270 | 87.64 | OK | 3.04 |
| 4*) | 50 | 50 | 0 | 1650 | 1.944 | 75.06 | OK | 3.26 |
| 5*) | 70 | 30 | 0 | 1650 | 2.459 | 89.22 | Cracked | — |
| 6*) | 50 | 0 | 50 | 1650 | 2.000 | 77.22 | Cracked | — |
| 7 | 50 | 0 | 50 | 1725 | 2.394 | 92.43 | OK | 6.37 |
| 8*) | 90 | 0 | 10 | 1725 | | To Hard to Machine | Cracked | — |
| 9*) | 70 | 15 | 15 | 1725 | 2.622 | 95.14 | Cracked | — |
| 10*) | 90 | 10 | 0 | 1650 | 2.834 | Extremely Hard | — | — |
| 11*) | 70 | 30 | 0 | 1685 | 2.448 | 88.82 | Cracked | — |
| 12 | 50 | 0 | 50(3) | 1725 | 2.380 | 91.89 | OK | 3.63 |
| 13*) | 70 | 0 | 30(3) | 1650 | 2.334 | 84.69 | Cracked | — |
| 14 | 55 | 45 | 0 | 1725 | 2.451 | 93.2 | OK | 9.13 |
| 15 | 60 | 40 | 0 | 1725 | 2.494 | 93.4 | OK | 8.00 |
| 16 | 65 | 35 | 0 | 1725 | 2.555 | 94.2 | OK | 9.66 |

(1) BN less than 0.5% wt. of $O_2$
(2) BN less than 2.0% wt. of $O_2$
(3) BN containing 1.3 to 2.0% wt. of $O_2$ – High-Temperature Heat-Treated BN
*) comparative samples

## Example III

Sample 15.2 (6-inch) diameter billets were produced from material as made in Sample No. 3 of Table 1. The billets were examined and their properties measured. Specifically, the density, room-temperature flexural strength, 1500°C flexural strength, coefficient of thermal expansion (CTE), Rockwell R hardness and sonic modulus were measured for each of the sample bars.

The flexural strengths, at 1500°C, and at room temperature, were determined using the ASTM D-690 three point loading method.

The sonic modulus for each sample bar was determined using the sonic resonance technique as disclosed in ASTM C747-74.

The CTE was measured by placing the sample bar on support pins and inserting lengthwise into a graphite tube furnace. An optical extensometer was used which comprised two parallel telescopic sights mounted so that the distance between the axis of the sights could be adjusted. A caliper was used to

6

measure the distance between the sights. The sights were focused on the ends of the sample bar through the sight tubes in the furnace. The furnace was heated under an inert atmosphere, and at appropriate temperature intervals the length of the sample was measured with the caliper. The CTE was calculated as the fractional change of the length of the sample divided by the rise in temperature in degrees centigrade.

The data obtained from these tests are shown in Table 2.

TABLE 2

MULLITE/BORON NITRIDE

| Sample | Density (g/cm³) | Sonic Modulus | | Room Temp. Flexural strength | | 1500°C Flexural strength | | Rockwell Hardness (R-Scale) | 1500°C CTE x $10^{-6}$ | | Percent Permanent Expansion |
|---|---|---|---|---|---|---|---|---|---|---|---|
| | | x$10^6$ kPa | x$10^6$ psi | kPa | psi | kPa | psi | | cm/cm /°C | in/in /°C | |
| 17[1] | 2.144 | 14.55 | 2.11 | 30648 | 4,445 | 19644 | 2,849 | 103.3 | 5.58 | 5.58 | 0.00 |
| 18[2] | 2.144 | 48.06 | 6.97 | 62510 | 9,066 | 36033 | 5,226 | 103.3 | 3.50 | 3.50 | 0.09 |

(1) sample cut parallel to the pressing direction.

(2) sample cut perpendicular to the pressing direction.

As evidenced from the data shown in Tables 1 and 2, ceramic composites made in accordance with this invention exhibit high abrasion resistance, high thermal shock resistance, good high temperature strength and will provide longer service life in heated environments. For break ring applications, the thickness of the rings should be machined so that the thickness or width of the ring is parallel to the direction that the pressure was applied during the hot pressing fabrication step.

**Claims**

1. A break ring of ceramic composite for use in horizontal continuous casting processes which consists of a mixture of from 40 to less than 70 weight percent mullite and from more than 30 to 60 weight percent boron nitride, based on the weight of the break ring.

2. A break ring according to claim 1, wherein the break ring consists of from 50 to 65 weight percent mullite and from 35 to 50 weight percent boron nitride.

3. A break ring according to claim 2, wherein the break ring consists of about 50 weight percent boron nitride and about 50 weight percent mullite.

4. A method for the manufacture of a ceramic composite having good resistance to thermal shock and good erosion/corrosion resistance to molten metals and alloys which comprises:
   (a) blending a mixture consisting of from 40 to less than 70 weight percent particulate mullite and from more than 30 to 60 weight percent particulate boron nitride;
   (b) heating and compressing the blended mixture of step (a) in a mold under an inert atmosphere at a temperature between about 1675°C and about 1770°C at a pressure between 126.6 and 189.87 Kg/cm$^2$ (1800 and 2700 pounds per square inch) until the composite substantially stops shrinking; and
   (c) cooling the composite.

5. A method according to claim 4, wherein in step (a) the blended mixture consists of from 50 to 65 weight percent particulate mullite and from 35 to 50 weight percent particulate boron nitride.

6. A method according to claim 5, wherein in step (a) the blended mixture consists of about 50 weight percent particulate mullite and about 50 weight percent particulate boron nitride.

7. A method according to claim 5 or 6, wherein in step (b) the temperature is between about 1710°C and 1725°C and the pressure is between about 147.7 and 161.7 Kg/cm$^2$ (2100 and 2300 pounds per square inch).

8. A method according to claim 4, wherein the boron nitride contains at least 2 percent by weight oxygen and in step (b) the temperature is between 1690° and 1770°C.

9. A method according to claim 4, wherein the boron nitride contains less than 2 percent by weight oxygen and in step (b) the temperature is between 1675°C and 1730°C.

10. A method according to any of claims 4 to 9, wherein the mullite has a particle size range between about 0.1 and 75 microns and the boron nitride has a particle size range of between about 0.1 and 45 microns.

**Patentansprüche**

1. Brechring aus Keramik-Composit für die Verwendung bei horizontalen Stranggießverfahren, bestehend aus einer Mischung aus 40 bis weniger als 70 Gew.-% Mullit und mehr als 30 bis 60 Gew.-% Bornitrid, bezogen auf das Gewicht des Brechrings.

2. Brechring nach Anspruch 1, wobei der Brechring aus 50 bis 65 Gew.-% Mullit und 35 bis 50 Gew.-% Bornitrid besteht.

3.  Brechring nach Anspruch 2, wobei der Brechring aus etwa 50 Gew.-% Bornitrid und etwa 50 Gew.-% Mullit besteht.

4.  Verfahren zur Herstellung eines Keramik-Composits mit guter Wärmeschockbeständigkeit und guter Erosions-/Korrosionsbeständigkeit gegenüber schmelzflüssigen Metallen und Legierungen, umfassend:
    (a) Vermengen einer Mischung, bestehend aus 40 bis weniger als 70 Gew.-% teilchenförmigem Mullit und mehr als 30 bis 60 Gew.-% teilchenförmigem Bornitrid;
    (b) Erhitzen und Komprimieren der vermengten Mischung von Schritt (a) in einer Form unter einer Inertatmosphäre bei einer Temperatur zwischen etwa 1675°C und etwa 1770°C und einem Druck zwischen etwa 126,6 und 189,87 kg/cm$^2$ (1800 und 2700 psi), bis die Schrumpfung des Composits im wesentlichen beendet ist; und
    (c) Abkühlen des Composits.

5.  Verfahren nach Anspruch 4, wobei die vermengte Mischung in Schritt (a) aus 50 bis 65 Gew.-% teilchenförmigem Mullit und 35 bis 50 Gew.-% teilchenförmigem Bornitrid besteht.

6.  Verfahren nach Anspruch 5, wobei die vermengte Mischung in Schritt (a) aus etwa 50 Gew.-% teilchenförmigem Mullit und etwa 50 Gew.-% teilchenförmigem Bornitrid besteht.

7.  Verfahren nach Anspruch 5 oder 6, wobei in Schritt (b) die Temperatur zwischen etwa 1710°C und 1725°C beträgt und der Druck zwischen etwa 147,7 und 161,7 kg/cm$^2$ (2100 und 2300 psi) beträgt.

8.  Verfahren nach Anspruch 4, wobei das Bornitrid wenigstens 2 Gew.-% Sauerstoff enthält und die Temperatur bei Schritt (b) zwischen 1690°C und 1770°C beträgt.

9.  Verfahren nach Anspruch 4, wobei das Bornitrid weniger als 2 Gew.-% Sauerstoff enthält und die Temperatur bei Schritt (b) zwischen 1675°C und 1730°C beträgt.

10. Verfahren nach irgendeinem der Ansprüche 4 bis 9, wobei der Mullit einen Teilchengrößenbereich zwischen etwa 0,1 und 75 µ aufweist und das Bornitrid einen Teilchengrößenbereich zwischen etwa 0,1 und 45 µ aufweist.

**Revendications**

1.  Anneau broyeur en composite de céramique pour emploi dans des processus de coulage continu horizontaux qui est composé d'un mélange allant de 40 à moins de 70 pour cent en poids de mullite et allant de plus de 30 à 60 pour cent en poids de nitrure de bore, basé sur le poids de l'anneau broyeur.

2.  Anneau broyeur selon la revendication 1, dans lequel l'anneau broyeur est composé de 50 à 65 pour cent en poids de mullite et de 35 à 50 pour cent en poids de nitrure de bore.

3.  Anneau broyeur selon la revendication 2, dans lequel l'anneau broyeur est composé d'environ 50 pour cent en poids de nitrure de bore et d'environ 50 pour cent en poids de mullite.

4.  Procédé de fabrication d'un composite de céramique ayant une bonne résistance au choc thermique et une bonne résistance à l'érosion/corrosion aux métaux fondus et aux alliages qui comprend:
    a) combiner un mélange composé de 40 à moins de 70 pour cent en poids de mullite particulaire et de plus de 30 à 60 pour cent en poids de nitrure de bore particulaire;
    b) chauffer et compresser le mélange combiné de l'étape a) dans un moule sous une atmosphère inerte à une température entre environ 1675°C et environ 1770°C à une pression située entre 126,6 et 189,87 Kg/cm$^2$ (1800 et 2700 livres par pouce carré) jusqu'à ce que le composite arrête sensiblement de rétrécir; et
    c) refroidir le composite.

5.  Procédé selon la revendication 4, dans lequel dans l'étape a) le mélange combiné est composé de 50 à 65 pour cent en poids de mullite particulaire et de 35 à 50 pour cent en poids de nitrure de bore particulaire.

**6.** Procédé selon la revendication 5, dans lequel dans l'étape a) le mélange combiné est composé d'environ 50 pour cent en poids de mullite particulaire et d'environ 50 pour cent en poids de nitrure de bore particulaire.

**7.** Procédé selon la revendication 5 ou 6, dans lequel dans l'étape b) la température est située entre environ 1710°C et 1725°C et la pression est située entre environ 147,7 et 161,7 Kg/cm$^2$ (2100 et 2300 livres par pouce carré).

**8.** Procédé selon la revendication 4, dans lequel le nitrure de bore contient au moins 2 pour cent en poids d'oxygène et dans l'étape b) la température est située entre 1690°C et 1770°C.

**9.** Procédé selon la revendication 4, dans lequel le nitrure de bore contient moins de 2 pour cent en poids d'oxygène et dans l'étape b) la température est située entre 1675°C et 1730°C.

**10.** Procédé selon l'une quelconque des revendications 4 à 9, dans lequel la mullite présente une fourchette de taille de particule entre environ 0,1 et 75 microns et le nitrure de bore présente une fourchette de taille de particule entre environ 0,1 et 45 microns.

FIG. 1

FIG. 2